Europäisches Patentamt

European Patent Office

Office européen des brevets

(19)

(11) Numéro de publication: **0 323 387**
**A1**

## (12) DEMANDE DE BREVET EUROPEEN

(21) Numéro de dépôt: **88630119.1**

(22) Date de dépôt: **30.06.88**

(51) Int. Cl.⁴: **F 16 L 41/08**

(30) Priorité: **31.12.87 LU 87098**

(43) Date de publication de la demande:
**05.07.89 Bulletin 89/27**

(84) Etats contractants désignés:
**AT BE CH DE ES FR GB GR IT LI NL SE**

(71) Demandeur: **SANSSON S.A.**
**9, Boulevard Roosevelt**
**Luxembourg (LU)**

(72) Inventeur: **Smith, George**
**Flager Inn Paradise Island**
**Nassau Bahamas (BS)**

(74) Mandataire: **Waxweiler, Jean et al**
**OFFICE DENNEMEYER S.à.r.l. P.O. Box 1502**
**L-1015 Luxembourg (LU)**

(54) **Raccord en T pour tuyauterie.**

(57) L'invention concerne un raccord en T composé de deux pièces (12,26) destinées à entourer un premier tuyau. L'une (12) des pièces est pourvue d'un alésage fileté (14) pour le raccordement d'un deuxième tuyau. La pièce (12) munie de l'alésage fileté (14) a la forme d'un demi-collier de serrage ayant une surface intérieure (20) adaptée à la surface extérieure du premier tuyau. La deuxième pièce (26) a la forme d'une tige coudée pourvue d'un pas de vis (28,30) à chacune de ses extrémités qui sont destinées à être reçues chacune dans un trou (36,38) respectif prévu sur le demi-collier de serrage et à y être retenue au moyen d'un écrou (32,32) vissé sur le pas de vis. L'extrémité intérieure de l'alésage (14) est prolongée au delà de la surface intérieure (22) du demi-collier sous forme d'une saillie. Une rainure (22) est prévue dans la surface intérieure (20) du demi-collier autour de ladite saillie (18). Un joint (24) annulaire élastique est placé dans ladite rainure (22); son épaisseur en direction de la profondeur de ladite rainure est plus grande que la profondeur de celle-ci.

Fig. 1

EP 0 323 387 A1

**Description**

## Raccord en T pour tuyauterie

La présente invention concerne un raccord en T pour tuyauterie composé de deux pièces destinées à entourer un premier tuyau, l'une des pièces étant pourvue d'un alésage fileté pour le raccordement d'un deuxième tuyau.

Un raccord en T connu comprend un corps creux cylindrique d'un diamètre légèrement supérieur au diamètre extérieur du tuyau sur lequel on veut réaliser un raccordement. Le raccord est muni d'un alésage fileté destiné à recevoir un tuyau à raccorder. Le corps cylindrique creux est glissé sur le tuyau et mis en place avec son alésage fileté en face d'un trou préalablement aménagé dans le tuyau à l'endroit où un raccordement doit être réalisé. Le trou a un diamètre légèrement inférieur à celui de l' alésage du raccord en T. Un raccord fileté sur l'extérieur et à l'intérieur est alors vissé dans l'alésage jusqu'à ce que son extrémité antérieure touche le tuyau. Le raccord est fixé sur le tuyau en serrant le raccord fileté dont l'extrémité antérieure forme alors un joint étanche entre le tuyau et le raccord en T à l'endroit prévu. Un tuyau peut alors être vissé dans le raccord fileté.

Il existe d'autres raccords en T en deux pièces formant chacune un demi-collier de serrage dont une est munie d'un alésage fileté pour raccorder un tuyau. Lors du montage les deux demi-colliers sont placés autour du tuyau en interposant un joint en forme de feuille élastique du côté de l'alésage entre le tuyau et le demi-collier. Les deux demi-colliers sont réunis aus moyens de boulons et un trou est foré dans le tuyau à partir de l'alésage. Alors un tuyau de diamètre approprié peut être vissé dans l'alésage.

Le second raccord en T décrit ne se prête que pour des petits diamètres, le premier ne peut être monté sur de la tuyauterie existante sans démontage partiel de celle-ci.

Le but de la présente invention est de réaliser un raccord en T permettant de réaliser un raccordement en T sur un tuyau d'une tuyauterie existante sans démontage de celle-ci, tout en étant approprié pour tuyaux de grand diamètre.

Ce but est réalisé selon l'invention par un raccord en T composé de deux pièces dans lequel la pièce munie de l'alésage fileté a la forme d'un demi-collier de serrage ayant une surface intérieure adaptée à la surface extérieure du premier tuyau, la deuxième pièce a la forme d'une tige coudée pourvue d'un pas de vis à chacune de ses extrémités qui sont destinées à être reçues chacune dans un trou respectif prévu sur le demi-collier de serrage et à y être retenue au moyen d'un écrou vissé sur le pas de vis, l'extrémité intérieure de l'alésage est prolongée au delà de la surface intérieure du demi-collier sous forme d'une saillie, une rainure est prévue dans la surface intérieure du demi-collier autour de ladite saillie et un joint annulaire élastique est placé dans ladite rainure, l'épaisseur du joint en direction de la profondeur de ladite rainure étant plus grande que la profondeur de celle-ci.

Des modes de réalisation avantageux sont décrits dans les sous-revendications.

Le raccord en T selon l'invention permet un montage facile dans une tuyauterie existante avec des tuyaux de grand diamètre.

L'invention sera maintenant décrite à titre d'exemple non-limitatif en se référant aux dessins annexés dans lesquels:

La figure 1 est une vue de face, partiellement en coupe, montrant tous les éléments du raccord selon l'invention;

la figure 2 est une projection horizontale de pièce avec alésage du raccord de la figure 1;

la figure 3 est une vue de côté, partiellement en coupe, de la pièce avec alésage du raccord de la figure 1;

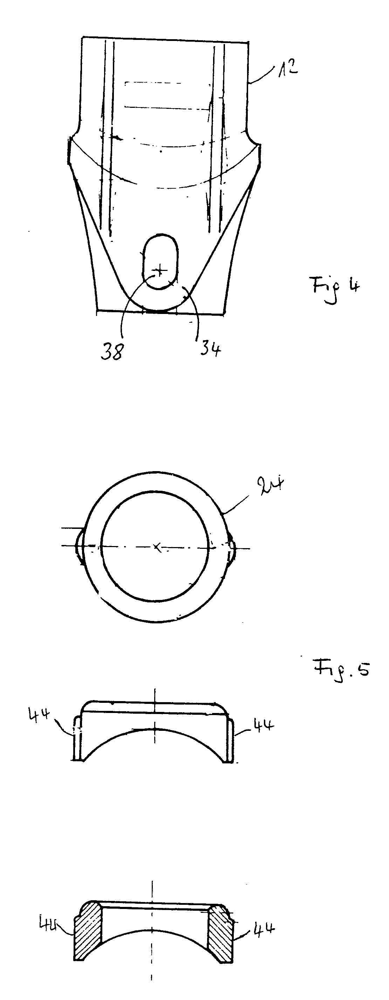

la figure 4 est une autre vue de côté de la pièce avec alésage du raccord de la figure 1; et

la figure 5 réprésente le joint élastique du raccord en projection horizontale, vue de côté et en coupe.

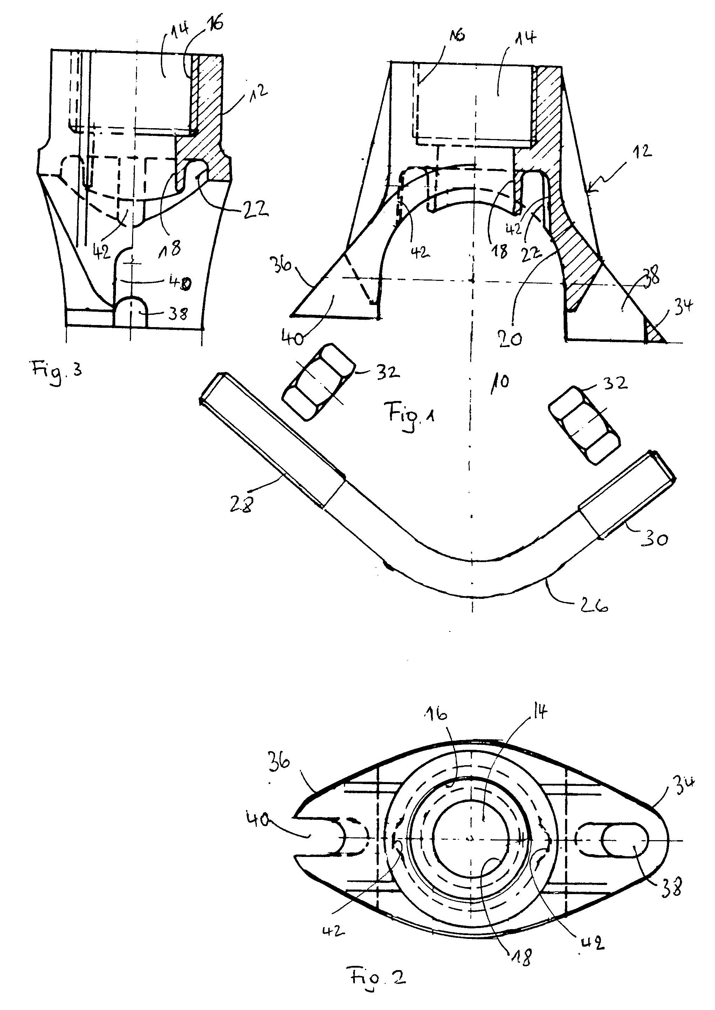

Dans la figure 1 le raccord 10 selon l'invention comprend une première pièce 12 en forme de demi-collier de serrage muni d'un alésage 14 pourvu d'un filet 16 destiné à recevoir le tuyau à raccorder. L'alésage 14 a à son extrémité inférieure une partie 18 de diamètre réduit sans filetage.

La surface intérieure 20 du raccord 10 est conçue pour s'adapter à la surface extérieure du tuyau (non représenté) sur lequel le raccord doit être monté. Une rainure 22 est aménagée dans la surface intérieure 20 du raccord 10 autour de la partie inférieure 18 de diamètre réduit de l'alésage 14. La rainure 22 sert à recevoir un joint 24 circulaire élastique de forme correspondante représentée dans la figure 5 en projection horizontale et latérale et en coupe. La hauteur du joint 24 est légèrement plus grande que la profondeur de la rainure 22 de sorte que le joint monté dans la rainure sort de la surface 20 du raccord 10.

La deuxième pièce 26 du raccord 10 est une tige coudée munie à chacune de ses extrémités 28,30 d'un pas de vis destiné à recevoir un écrou 32 correspondant.

La première pièce 12 du raccord 10 comprend deux oreilles 34,36 situées de part et d'autre de l'alésage 14 et munies chacune d'un trou 38,40 correspondant, le trou 40 de l'oreille 36 étant ouvert sur un côté. Les trous 38 et 40 servent à recevoir les extrémités 30 et 28, respectivement de la tige coudée 26 lorsque le raccord 10 est monté sur un tuyau.

L'extrémité inférieure 18 de diamètre réduit de l' alésage 14 dépasse la surface 22 et peut pénétrer dans le trou (non montré) aménagé dans la paroi du tuyau sur lequel le raccord doit être monté. La hauteur de cette saillie de l'extrémité inférieure 18 de l'alésage 14 peut être égale à l'épaisseur de la paroi.

Des évidements 42 opposés peuvent être prévus d'une paroi latérale de la rainure 22. Ils sont destinés pour recevoir des saillies 44 correspondantes du joint circulaire 24. Les évidements 42 et les saillies 44 permettent de placer plus facilement le joint 24 correctement dans la rainure 22.

Lorsqu'un raccordement est à réaliser sur un tuyau d'une tuyauterie existante, un trou est d'abord foré à l'endroit désiré. Le diamètre du trou est au moins égal ou légèrement plus grand que le diamètre extérieur de la saillie de la partie inférieure 18 de l'alésage 14 du raccord 10 approprié. Le joint 24 est mis en place dans la rainure 22 du raccord 10 et le raccord 10 est placé sur le tuyau (non montré) de sorte que la saillie de la partie inférieure 18 pénétre dans le trou foré dans le tuyau. La pièce coudée 26 est placé contre le tuyau de sorte qu'une extrémité 28,30 respective pénètre dans le trou associé 36,38 respectif. Un écrou 32 est vissé sur chaque extrémité 28,30 de la tige coudée 26 et serré de sorte que le raccord est fixé sur le tuyau. Le joint 24 est comprimé et forme un joint étanche entre le tuyau (non montré) et le raccord en T 10. Un tuyau de diamètre approprié peut alors être vissé dans le pas de vis 16 de l'alésage 14 du raccord 10 et un raccordement étanche et sûr est réalisé.

## Revendications

1. Raccord en T composé de deux pièces (12,26) destinées à entourer un premier tuyau, l'une (12) des pièces étant pourvue d'un alésage fileté (14) pour le raccordement d'un deuxième tuyau, caractérisé en ce que la pièce (12) munie de l'alésage fileté (14) la forme d'un demi-collier de serrage ayant une surface intérieure (20) adaptée à la surface extérieure du premier tuyau, que la deuxième pièce (26) a la forme d'une tige coudée pourvue d'un pas de vis (28,30) à chacune de ses extrémités qui sont destinées à être reçues chacune dans un trou (36,38) respectif prévu sur le demi-collier de serrage et à y être retenue au moyen d'un écrou (32,32) vissé sur le pas de vis, que l'extrémité intérieure de l'alésage (14) est prolongée au delà de la surface intérieure (22) du demi-collier sous forme d'une saillie, qu'une rainure (22) est prévue dans la surface intérieure (20) du demi-collier autour de ladite saillie (18) et qu'un joint (24) annulaire élastique est placé dans ladite rainure (22), l'épaisseur du joint en direction de la profondeur de ladite rainure étant plus grande que la profondeur de celle-ci.

2. Raccord selon la revendication 1, caractérisé par des évidements diamètralemenet opposés dans une paroi latérale de ladite rainure et des saillies correspondantes sur ledit joint.

3. Raccord selon la revendication 1 ou 2, caractérisé en ce que l'extrémité intérieure de l'alésage a un diamètre réduit de l'ordre de grandeur du diamètre intérieur du deuxième tuyau et n'est pas munie d'un filet.

4. Raccord selon l'une quelconque des revendications 1 à 3, caractérisé en ce que ladite saillie a une hauteur uniforme par rapport à la surface intérieure du demi-collier.

5. Raccord selon la revendication 4, caractérisé en ce que ladite hauteur est égale à l'épaisseur du premier tuyau.

Fig. 3

Fig. 1

Fig. 2

Fig 4

38      34

24

Fig. 5

44      44

44      44

Office européen des brevets

RAPPORT DE RECHERCHE EUROPEENNE

Numero de la demande

EP 88 63 0119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 073 513 (BLAKELEY)<br>* Figures *<br>--- | 1-3,5 | F 16 L 41/08 |
| Y | BE-A- 401 671 (R. DUQUESKE)<br>* Figures *<br>--- | 1-3,5 | |
| Y | FR-A- 793 236 (VEREINIGTE ARMATUREN GmbH)<br>* Figures *<br>--- | 1,3-5 | |
| Y | US-A-4 506 917 (A. HANSEN)<br>* Figures *<br>----- | 1,3-5 | |

|  |  |
|---|---|
| | DOMAINES TECHNIQUES RECHERCHES (Int. Cl.4) |
| | F 16 L 41<br>F 16 L 47 |

Le présent rapport a été établi pour toutes les revendications

| Lieu de la recherche | Date d'achèvement de la recherche | Examinateur |
|---|---|---|
| LA HAYE | 10-04-1989 | BARTSCH A.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : .. .. .. la même famille, document correspondant

EPO FORM 1503 03.82 (P0402)